# EUROPÄISCHE PATENTSCHRIFT

(11) **EP 3 545 214 B1**
(45) Veröffentlichungstag und Bekanntmachung des Hinweises auf die Patenterteilung: **23.09.2020**
(21) Anmeldenummer: 17787405.4
(22) Anmeldetag: 23.10.2017
(51) Int. Cl.: F16H 63/34

(54) **ENTSPERRVORRICHTUNG FÜR EIN FAHRZEUG**
RELEASE DEVICE FOR A VEHICLE
DISPOSITIF DE DÉVERROUILLAGE POUR UN VÉHICULE

(30) Priorität: 28.11.2016 DE 102016223557
(43) Veröffentlichungstag der Anmeldung: 02.10.2019
(73) Patentinhaber: ZF Friedrichshafen AG, 88046 Friedrichshafen (DE)
(72) Erfinder: BODE, Carsten, 49356 Diepholz (DE); SPRATTE, Joachim, 49090 Osnabrueck (DE); AUMANN, Torsten, 49406 Drentwede (DE); PLESTERNINGS, Frank, 49453 Barver (DE); SQUERI, Angela, 88094 Oberteuringen (DE); HERRMANN, Martin, 88094 Oberteuringen (DE); PFEIFFER, Daniel, 88276 Berg (DE)
(74) Vertreter: ZF Friedrichshafen AG
(86) Internationale Anmeldenummer: PCT/EP2017/076952
(87) Internationale Veröffentlichungsnummer: WO 2018/095665

(56) Entgegenhaltungen:
- WO-A1-2017/189508
- DE-A1-102008 011 898
- DE-A1-102015 008 709
- FR-A1- 2 964 925
- JP-A- 2008 128 470

## Beschreibung

Die vorliegende Erfindung bezieht sich auf eine Entsperrvorrichtung zum Erkennen zumindest einer Stellung einer Antriebseinheit in einer oder im Bereich einer Schiebereinheit für ein Fahrzeug und ein Verfahren zum Sensieren zumindest einer Stellung einer Antriebseinheit in einer oder im Bereich einer Schiebereinheit einer Entsperrvorrichtung eines Fahrzeugs.

Eine gattungsgemäße Entsperrvorrichtung ist aus der DE-A1-102015008709 bekannt.

Ferner offenbart die Internationale Anmeldung, die unter den Artikel 54(3) EPÜ fällt, eine Entsperrvorrichtung mit einer Antriebseinheit, einer Schiebereinheit und einer Sensoreinrichtung, wobei die Antriebseinheit als eine Exzentereinrichtung ausgeformt ist und die Entsperrvorrichtung zudem mit einer Betätigungseinrichtung ausgestattet ist;

Steht bei Automatikgetrieben eines Fahrzeugs ein Gangwahlhebel auf "P", ist eine Parksperre eingerastet und verhindert ein Wegrollen des Fahrzeuges. Die Parksperre kann über einen Seilzug vom Gangwahlhebel angesteuert werden. Bei einigen Automatikgetrieben erfolgt das Ein- und Auslegen über eine interne hydraulische Vorsteuerung. Bei einigen Getrieben erfolgt das Betätigen auch über Elektromotoren. Bei diesen aktuiert ein Elektromotor über ein Getriebe die Parksperre und sichert bzw. entsichert so das Fahrzeug gegen Wegrollen.

Vor diesem Hintergrund schafft die vorliegende Erfindung eine verbesserte Entsperrvorrichtung zum Erkennen zumindest einer Stellung einer Antriebseinheit in einer oder im Bereich einer Schiebereinheit für ein Fahrzeug gemäß Anspruch 1.

Vorteilhafte Ausgestaltungen ergeben sich aus den Unteransprüchen und der nachfolgenden Beschreibung.

Gemäß der vorliegenden Erfindung umfasst eine Entsperrvorrichtung zum Erkennen zumindest einer Stellung einer Antriebseinheit in einer oder im Bereich einer Schiebereinheit für ein Fahrzeug zumindest die Antriebseinheit, die Schiebereinheit und eine Sensoreinrichtung. Die Antriebseinheit ist in einer ersten Position zumindest teilweise in der Schiebereinheit der Entsperrvorrichtung angeordnet oder anordenbar, um eine Parksperre des Fahrzeugs zu sperren, und in einer zweiten Position zumindest teilweise aus der Schiebereinheit herausbewegt angeordnet, um die Parksperre zu entsperren. Hierbei kann die Antriebseinheit beispielsweise als eine Exzentereinrichtung ausgeformt sein oder als ein Zahnrad, das dazu ausgeformt ist, um sich an einer Innenseite der Schiebereinheit entlang zu bewegen. Die Schiebereinheit ist dazu ausgeformt, um die Antriebseinheit zumindest in der ersten Position der Antriebseinheit zumindest teilweise aufzunehmen. Hierbei kann die Antriebseinheit oder ein Abschnitt der Antriebseinheit beispielsweise in der ersten Position komplett in der Schiebereinheit aufgenommen sein und in der zweiten Position teilweise aus der Schiebereinheit herausbewegt sein, die Antriebseinheit oder ein Abschnitt der Antriebseinheit kann aber auch in der ersten Position nur teilweise in der Schiebereinheit aufgenommen sein und in der zweiten Position komplett aus der Schiebereinheit herausbewegt sein. Die Sensoreinrichtung weist zumindest eine an der Antriebseinheit angeordnete Antriebssensoreinrichtung und/oder eine an der Schiebereinheit angeordnete Schiebersensoreinrichtung auf, wobei die Sensoreinrichtung dazu ausgebildet ist, um zumindest die in der Schiebereinheit aufgenommene oder im Bereich der Schiebereinheit angeordnete Stellung der Antriebseinheit zu erkennen.

Eine hier vorgestellte Entsperrvorrichtung ermöglicht es aufgrund der vorgestellten Sensoreinrichtung zumindest eine Stellung einer Antriebseinheit in einer Schiebereinheit zu erkennen, die wiederum Aufschluss darüber geben kann, ob eine Parksperre des Fahrzeugs gesperrt oder entsperrt ist. Hierbei kann die Stellung die zweite Position der Antriebseinheit repräsentieren, um durch das Erkennen der Stellung eine entsperrte Parksperre identifizieren zu können.

Hierbei kann die Sensoreinrichtung dazu ausgebildet sein, um eine Antriebssensorposition eines Antriebssensors der Antriebssensoreinrichtung und/oder eine Schiebersensorposition eines Schiebersensors der Schiebersensoreinrichtung zu vergleichen, um die Stellung zu erkennen. Dies kann beispielsweise dann ermöglicht sein, wenn die Antriebssensorposition einer Schiebersensorposition zugeordnet ist, insbesondere wobei die Stellung erkannt werden kann, wenn die Antriebssensorposition nicht in einem vorgestimmten Verhältnis zu der zugeordneten Schiebersensorposition angeordnet ist. Hierbei kann beispielsweise eine Antriebssensorposition R1 einer Schiebersensorposition R zugeordnet sein, die einer Gangwahlhebelposition eines Gangwahlhebels des Fahrzeugs in einem Gang R entspricht. Hierbei kann die Antriebssensorposition R1 im Bereich der ersten Position der Antriebseinheit angeordnet sein. Die Antriebssensorposition ist demnach nicht in dem vorbestimmten Verhältnis zu der Schiebersensorposition angeordnet, wenn die Antriebseinheit in die zweite Position bewegt wurde. So kann schnell und einfach erkannt werden, dass die Parksperre durch die Entsperrvorrichtung entsperrt ist.

Die Antriebssensoreinrichtung kann eine Mehrzahl von Antriebssensoren aufweisen, die bogenförmig, beispielsweise auf einem Abschnitt der Antriebseinheit, angeordnet sein und/oder die Schiebersensoreinrichtung kann eine Mehrzahl von Schiebersensoren aufweisen, die linear angeordnet sind. Unter einer bogenförmigen Anordnung der Exzentersensoren kann eine Anordnung der Exzentersensoren verstanden werden, bei der ein an einem Exzenter angeordnetes Elemente bei einer Drehung des Exzenters die Exzentersensoren überstreicht. So können weitere typische Antriebssensorpositionen Schiebersensorpositionen zugeordnet werden, die beispielsweise weitere typische Schaltgetriebeeinstellungen wie z. B. P repräsentieren können.

Um einem Verschleiß der Sensoreinrichtung entgegenzuwirken, ist es von Vorteil, wenn zumindest ein Antriebssensor der Antriebssensoreinrichtung und/oder ein Schiebersensor der Schiebersensoreinrichtung zumindest teilweise als ein Magnetsensor ausgeformt ist. Zum Erkennen zumindest der einen zugeordneten Position kann die Antriebseinheit und/oder die Schiebereinheit zumindest einen Magneten aufweisen.

Da gemäß vorliegender Erfindung die Antriebseinheit als eine Exzentereinrichtung ausgeformt ist, werden die im Folgenden beschriebenen Ausführungsformen der vorliegenden Erfindung mit einer als die Exzentereinrichtung ausgeformten Antriebseinheit beschrieben:
Gemäß einer Ausführungsform kann die Schiebereinheit der Entsperrvorrichtung über ein Übertragungselement, wie beispielsweise einen Seilzug, mit der Parksperre gekoppelt oder koppelbar sein, wobei die Schiebereinheit dazu ausgeformt sein kann, um in einer Sperrposition das Übertragungselement in einer Parksperrposition zu positionieren, um die Parksperre zu sperren oder einzulegen, wenn die Exzentereinrichtung in der ersten Position angeordnet ist und ansprechend auf ein Bewegen der Exzentereinrichtung in die zweite Position in eine Entsperrposition überzugehen, in der die Schiebereinheit das Übertragungselement in einer Parkentsperrposition positioniert, um die Parksperre zu entsperren oder auszulegen. So kann ansprechend auf das Bewegen der Exzentereinrichtung von der ersten Position in die zweite Position die Parksperre rein mechanisch entsperrt werden. Dies kann mit nur einem in einer Schalteinrichtung des Fahrzeugs bereits vorhandenes Übertragungselement, wie beispielsweise dem Seilzug, geschehen, wobei die Parksperre stromlos und von Hand entsperrbar ist. Dies kann von Vorteil sein, wenn ein defektes Fahrzeug von einer Parkposition entfernt werden soll.

Die Entsperrvorrichtung weist gemäß der vorliegenden Erfindung weiterhin eine Betätigungseinrichtung auf, die dazu ausgebildet ist, um ansprechend auf eine Betätigung die Exzentereinrichtung von der ersten Position in die zweite Position zu bewegen. Hierzu kann die Betätigungseinrichtung beispielsweise am Gangwahlhebel oder im Bereich des Gangwahlhebels des Fahrzeugs angeordnet sein, da die Betätigungseinrichtung hier für einen Benutzer gut zugänglich ist.

Ein in die Schiebereinheit aufgenommener Abschnitt der Exzentereinrichtung ist gemäß der vorliegenden Erfindung dazu ausgeformt sein, um ansprechend auf die Betätigung der Betätigungseinrichtung eine Linearbewegung entlang einer Exzenterachseneinrichtung der Exzentereinrichtung, die sich senkrecht zu einer Ebene des Abschnitts erstreckt, auszuführen. So kann der Abschnitt entlang der Exzenterachseneinrichtung von der ersten Position in die zweite Position bewegt werden. Hierbei kann der Abschnitt in der ersten Position der Exzentereinrichtung in einer Durchgangsöffnung der Schiebereinheit aufgenommen sein und in der zweiten Position der Exzentereinrichtung aus der Durchgangsöffnung teilweise herausbewegt worden sein oder aber auch komplett aus der Durchgangsöffnung herausbewegt worden sein.

Gemäß einer Ausführungsform kann der Abschnitt der Exzentereinrichtung ein Versatzelement aufweisen, das dazu ausgeformt ist, um ansprechend auf die Linearbewegung der Exzentereinrichtung eine senkrecht zu der Linearbewegung verlaufende Seitwärtsbewegung der Schiebereinheit zu begrenzen, wenn die Exzentereinrichtung gemäß einer Ausführungsform auch in der zweiten Position zumindest teilweise in der Schiebereinheit angeordnet ist. Das Versatzelement kann hierbei vorteilhafterweise eine stufenförmige Erhöhung des Abschnitts ausformen, die dazu ausgeformt ist, um in der zweiten Position der Exzentereinrichtung die Seitwärtsbewegung der Schiebereinheit formschlüssig zu begrenzen. So kann die Schiebereinheit in der zweiten Position der Exzentereinrichtung an dem Versatzelement anliegend angeordnet sein.

Zum Begrenzen des Bewegens der Exzentereinrichtung, z. B. der Linearbewegung, kann die Exzentereinrichtung, beispielsweise die Exzenterachseneinrichtung zumindest eine Druckfeder aufweisen, die in der ersten Position der Exzentereinrichtung entspannt ist und die angeordnet ist, um ansprechend auf die Betätigung durch zumindest eine Komponente der Exzentereinrichtung, beispielsweise durch den Abschnitt, gespannt zu werden. Eine solche Druckfeder kann zudem ein erleichtertes Bewegen der Komponente von der zweiten Position zurück in die erste Position ermöglichen.

Die Entsperrvorrichtung kann gemäß einer vorteilhaften Ausführungsform eine Übersetzungseinrichtung aufweisen, die dazu ausgebildet, ist, um die Schiebereinheit von der Sperrposition in die Entsperrposition zu übersetzen. Die Übersetzungseinrichtung kann hierbei ein schonendes Übersetzen der Schiebereinheit von der Sperrposition in die Entsperrposition ermöglichen, bei dem beispielsweise ein Verschleiß des Versatzelements verhindert werden kann. Hierzu weist die Übersetzungseinrichtung zumindest eine Unterstützungsfeder auf, die angeordnet ist, um in der Sperrposition der Schiebereinheit eine Vorspannung auf die Schiebereinheit und/oder eine Hebeleinrichtung der Übersetzungseinrichtung auszuüben, wobei die Unterstützungsfeder angeordnet ist, um ansprechend auf das Bewegen der Exzentereinrichtung in die zweite Position, die Vorspannung freizugeben, um ein Überführen der Schiebereinheit in die Entsperrposition zu ermöglichen.

Von Vorteil ist es weiterhin, wenn die Übersetzungseinrichtung zudem zumindest die Hebeleinrichtung aufweist, die dazu ausgeformt sein kann, um ansprechend auf ein Freigeben der Vorspannung der Unterstützungsfeder umgelegt zu werden, um die Schiebereinheit schonend in die Entsperrposition zu schieben.

Um das Übersetzen der Schiebereinheit von der Sperrposition in die Entsperrposition zu verhindern, solange die Exzentereinrichtung in der ersten Position angeordnet ist, kann die Übersetzungseinrichtung zumindest eine Hakeneinrichtung mit zumindest einem Haken aufweisen, der in der ersten Position der Exzentereinrichtung derart mit der Hebeleinrichtung gekoppelt ist, dass ein Umlegen der Hebeleinrichtung formschlüssig verhindert wird. Weiterhin kann die Hakeneinrichtung angeordnet sein, um durch das Bewegen der Exzentereinrichtung in die zweite Position durch die Exzentereinrichtung, beispielsweise durch den Abschnitt, derart ausgelenkt zu werden, dass der Haken die Hebeleinrichtung freigibt und die Hebeleinrichtung angetrieben durch die Unterstützungsfeder umgelegt wird.

Von Vorteil ist es weiterhin, wenn die Entsperrvorrichtung zumindest ein beispielsweise an oder in einem Gehäuse der Entsperrvorrichtung angeordnetes Dämpfungselement aufweist, das dazu ausgebildet ist, um zumindest ein Geräusch der Entsperrvorrichtung akustisch zu dämpfen, beispielsweise ein beim Entsperren der Parksperre erzeugtes Geräusch. Hierzu kann das Dämpfungselement zumindest eine Öffnung aufweisen, die dazu ausgeformt ist, um einen Dom einer Adaptereinrichtung aufzunehmen, an die die Entsperrvorrichtung fixiert werden soll. Zum Fixieren der Entsperrvorrichtung an der Adaptereinrichtung kann das Dämpfungselement zumindest eine selbstschneidende Schraube aufweist, die dazu ausgeformt ist, um in den Dom der Adaptereinrichtung eingeschraubt zu werden, wenn das Dämpfungselement von dem Dom aufgenommen ist.
Fig. 1 eine schematische Darstellung eines Fahrzeugs mit einer Entsperrvorrichtung gemäß einem Ausführungsbeispiel;
Fig. 2 eine perspektivische Ansicht einer Entsperrvorrichtung gemäß einem Ausführungsbeispiel;
Fig. 3 eine schematische Aufsicht auf eine Entsperrvorrichtung gemäß einem Ausführungsbeispiel;
Fig. 4 eine seitliche Querschnittdarstellung einer Entsperrvorrichtung gemäß einem Ausführungsbeispiel;
Fig. 5 eine schematische Querschnittdarstellung einer Schalteinrichtung mit einer Entsperrvorrichtung gemäß einem Ausführungsbeispiel;
Fig. 6 eine Aufsicht auf eine Entsperrvorrichtung gemäß einem Ausführungsbeispiel;
Fig. 7 eine Aufsicht auf eine Entsperrvorrichtung gemäß einem Ausführungsbeispiel;
Fig. 8 eine seitliche Querschnittdarstellung einer Entsperrvorrichtung gemäß einem Ausführungsbeispiel;
Fig. 9 eine Aufsicht auf eine Entsperrvorrichtung gemäß einem Ausführungsbeispiel;
Fig. 10 eine seitliche Querschnittdarstellung einer Entsperrvorrichtung gemäß einem Ausführungsbeispiel;
Fig. 11 eine perspektivische Darstellung einer Exzentereinrichtung mit einem Versatzelement gemäß einem Ausführungsbeispiel;
Fig. 12 eine perspektivische Aufsicht auf eine Hakeneinrichtung gemäß einem Ausführungsbeispiel;
Fig. 13 eine Aufsicht auf eine Entsperrvorrichtung mit einer Sensoreinrichtung gemäß einem Ausführungsbeispiel;
Fig. 14 eine Darstellung einer Verschaltung von Sensoren gemäß einem Ausführungsbeispiel;
Fig. 15 eine perspektivische Ansicht eines Dämpfungselements gemäß einem Ausführungsbeispiel;
Fig. 16 eine seitliche Querschnittsdarstellung eines Dämpfungselements gemäß einem Ausführungsbeispiel; und
Fig. 17 ein Ablaufdiagramm eines Verfahrens zum Betreiben einer Entsperrvorrichtung gemäß einem Ausführungsbeispiel, welches nicht Bestandteil der vorliegenden Erfindung ist,

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

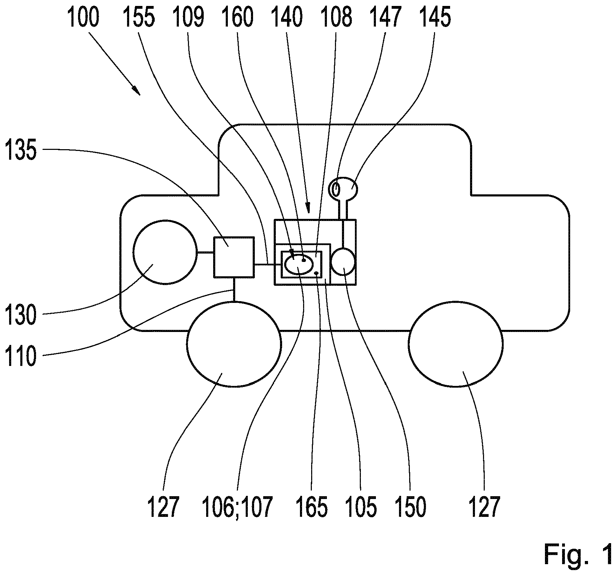

Figur 1 zeigt eine schematische Darstellung eines Fahrzeugs 100 mit einer Entsperrvorrichtung 105 gemäß einem Ausführungsbeispiel. Die Entsperrvorrichtung 105 ist dazu ausgebildet, um zumindest eine Stellung einer Antriebseinheit 106 in einer oder im Bereich einer Schiebereinheit 108 zu erkennen. Hierzu umfasst die Entsperrvorrichtung 105 zumindest die Antriebseinheit 106, die gemäß diesem Ausführungsbeispiel als eine Exzentereinrichtung 107 ausgeformt ist, die Schiebereinheit 108 und eine Sensoreinrichtung 109.

Das Fahrzeug 100 weist außer der Entsperrvorrichtung 105 gemäß diesem Ausführungsbeispiel weiterhin zumindest eine Parksperre 110, eine Mehrzahl von Rädern 127, einen Motor 130, ein Fahrzeuggetriebe 135, das gemäß diesem Ausführungsbeispiel als ein Automatikgetriebe ausgeformt ist, und eine Schalteinrichtung 140 mit einem Gangwahlhebel 145 mit einer Betätigungseinrichtung 147 auf. Gemäß diesem Ausführungsbeispiel ist die Entsperrvorrichtung 105 Teil der Schalteinrichtung 140, wobei die Entsperrvorrichtung 105 in einem Innenraum der Schalteinrichtung 140 aufgenommen ist. Optional ist die Betätigungseinrichtung 147 gemäß diesem Ausführungsbeispiel Teil der Entsperrvorrichtung 105 und an dem Gangwahlhebel 145 der Schalteinrichtung 140 angeordnet, um für einen sich in dem Fahrzeug 100 befindenden Fahrer des Fahrzeugs 100 zugänglich zu sein. In dem Innenraum der Schalteinrichtung 140 ist gemäß diesem Ausführungsbeispiel zudem ein Schalteinrichtungsmotor 150 angeordnet. Die Schiebereinheit 108 der Entsperrvorrichtung 105 ist über ein Übertragungselement 155 wie beispielsweise einen Seilzug und das Fahrzeuggetriebe 135 mit der Parksperre 110 gekoppelt.

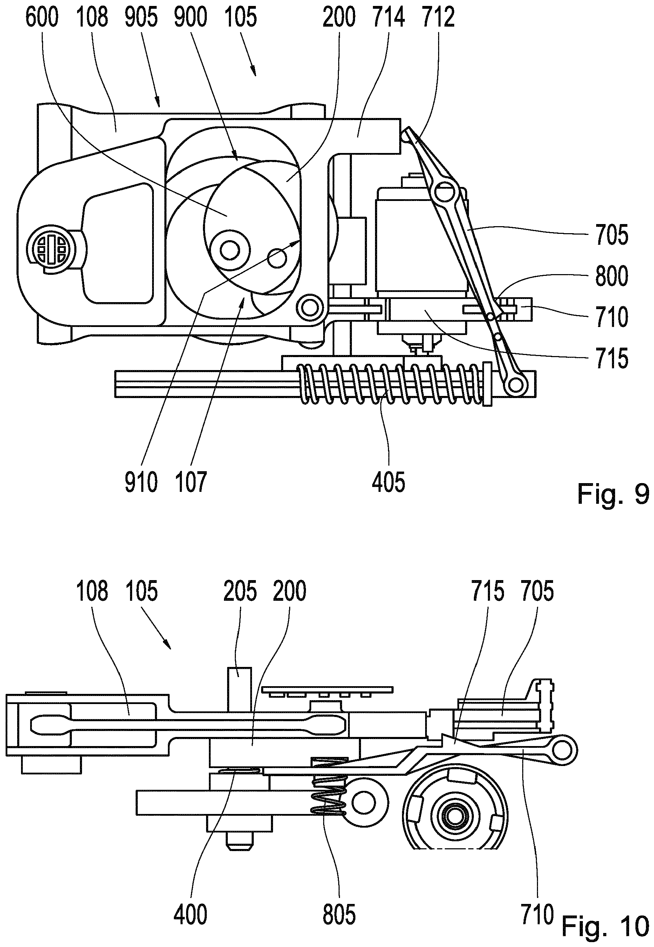

Die Exzentereinrichtung 107 ist in einer hier dargestellten ersten Position zumindest teilweise in der Schiebereinheit 108 der Entsperrvorrichtung 105 angeordnet, um die Parksperre 110 des Fahrzeugs 100 zu sperren oder einzulegen, und in einer in den Figuren 9 und 10 dargestellten zweiten Position zumindest teilweise aus der Schiebereinheit 108 herausbewegt angeordnet, um die Parksperre 110 zu entsperren oder auszulegen. Die Schiebereinheit 108 nimmt die Exzentereinrichtung 107 zumindest in der hier dargestellten ersten Position der Exzentereinrichtung 107 zumindest teilweise auf. Die Sensoreinrichtung 109 weist zumindest eine an der Exzentereinrichtung 107 angeordnete Antriebssensoreinrichtung 160 und eine an der Schiebereinheit 108 angeordnete Schiebersensoreinrichtung 165 auf, wobei die Sensoreinrichtung 109 dazu ausgebildet ist, um zumindest die in der Schiebereinheit 108 aufgenommene oder im Bereich der Schiebereinheit 108 angeordnete Stellung der Exzentereinrichtung 107 zu erkennen. Gemäß diesem Ausführungsbeispiel repräsentiert die Stellung eine in der zweiten Position angeordnete Position der Exzentereinrichtung 107.

Gemäß diesem Ausführungsbeispiel ist die Exzentereinrichtung 107 dazu ausgebildet, um in der zumindest teilweise in der Schiebereinheit 108 aufgenommenen ersten Position die Schiebereinheit 108 in einer Sperrposition zu halten, in der die Parksperre 110 gesperrt ist und in der zweiten Position ein Übersetzen der Schiebereinheit 108 in eine Entsperrposition zu ermöglichen, in der die Parksperre 110 entsperrt ist. Die Schiebereinheit 108 ist über den Seilzug 155 mit der Parksperre 110 gekoppelt und dazu ausgeformt, um in der Sperrposition das Übertragungselement 155 bzw. den Seilzug in einer Parksperrposition zu positionieren, um die Parksperre 110 zu sperren oder einzulegen und in der Entsperrposition das Übertragungselement 155 bzw. den Seilzug in einer Parkentsperrposition zu positionieren, um die Parksperre 110 zu entsperren oder auszulegen. Die Betätigungseinrichtung 147 ist dazu ausgebildet, um ansprechend auf eine Betätigung die Exzentereinrichtung 107 von der ersten Position in die zweite Position zu bewegen.

Im Folgenden wird die vorliegende Erfindung noch einmal detaillierter ausgeführt:
Bei zunehmend automatisierten Fahrfunktionen und elektrifizierten Fahrzeugen 100 werden sich elektrisch aktuierte Parksperren 110 durchsetzen. Schaltbetätigungen zur Gangwahl von Fahrzeuggetrieben 135, zuvor als Gangwahlhebel 145 bezeichnet, befinden sich im Innenraum des Fahrzeugs 100. Bei Gangwahlhebeln 145 gibt es verschiedene Varianten:
Bei manuellen Schaltbetätigungen wird sowohl die Gangwahl, wie auch das Ein- und Auslegen der Parksperre 110 mechanisch über ein oder mehrere Übertragungselemente 155 wie Gestänge oder Seilzüge realisiert. In der weiteren Beschreibung wird der hier vorgestellte Ansatz unter Verwendung eines Seilzugs als Übertragungselement 155 beschrieben, obgleich es für den Fachmann zweifelsfrei ersichtlich ist, dass auch ein alternatives Übertragungselement wie beispielsweise ein Gestänge als Übertragungselement 155 verwendet werden kann. Schaltbetätigungen mit elektronischer Erfassung der Wählhebelposition des Gangwahlhebels 145 und mechanischer Betätigung der Parksperre 110 dagegen sind sehr gebräuchlich. Zuletzt gibt es noch vollelektronische Wählbetätigungen, die zunehmend in modernen Fahrzeugen 100 zu finden sind. Hier werden sowohl eine Positionserfassung, wie auch ein Fahrerwunsch zur Betätigung der Parksperre 110 elektronisch zum Fahrzeuggetriebe 135, bzw. zur Entsperrvorrichtung 105, die auch als Parksperrenaktuator bezeichnet werden kann, übertragen.

Bei Fahrzeugen 100, bei denen verschiedene, der o.g. Schaltbetätigungskonzepte zum Einsatz kommen, ist es erforderlich, eine Modularität auch bei der Entsperrvorrichtung 105 darzustellen. Für die Entsperrvorrichtung 105 gibt es verschiedene potenzielle Verbauorte wie z. B. am Fahrzeuggetriebe 135, im Motorraum oder, wie hier dargestellt, unterhalb des im Innenraum des Fahrzeugs 100 angeordneten Gangwahlhebels 145. Gemäß diesem Ausführungsbeispiel erfolgt dann eine Betätigung der Parksperre 110 über den Seilzug 135. Gemäß einem alternativen Ausführungsbeispiel kann die Betätigung der Parksperre 110 auch über ein Gestänge erfolgen. Für den Fall, dass das Fahrzeug 100 nach einem Defekt abgeschleppt werden muss, ist es bei allen oben aufgeführten Konzepten aber erforderlich, die Parksperre 110 stromlos und von Hand entriegeln zu können. Um für den Fall einer Notentriegelung des Fahrzeuges 100 das Fahrzeug 100 noch über die Bremse sichern zu können, erfolgt eine Bedienung der Entsperrvorrichtung 105, die auch als Notentriegelung bezeichnet werden kann, gemäß diesem Ausführungsbeispiel aus dem Innenraum des Fahrzeugs 100 durch das Betätigen der Betätigungseinrichtung 147. Hierzu wird bei bekannten Fahrzeugen ein zusätzlicher Seilzug vom Fahrzeuggetriebe in den Innenraum des Fahrzeugs verlegt, an den dann ein Entriegelungsmechanismus angeschlossen ist.

Anders als bei bekannten Entsperrvorrichtungen, bei denen eine Notentriegelung separat in den Innenraum verlegt ist, wird bei der hier vorgestellten Entsperrvorrichtung 105 vorteilhafterweise nur ein einziger Seilzug 155 benötigt. Ein Betätigen der Entsperrvorrichtung 105 überträgt Schwingungen und Geräusche vom Fahrzeuggetriebe 135 über den Seilzug 155 in den Innenraum des Fahrzeugs 100, die störend wahrgenommen werden können. Da die hier beschriebene Entkopplungsvorrichtung 105 lediglich einen Seilzug 155 aufweist, müssen diese Schwingungen und Geräusche vorteilhafterweise nur einmal entkoppelt werden.

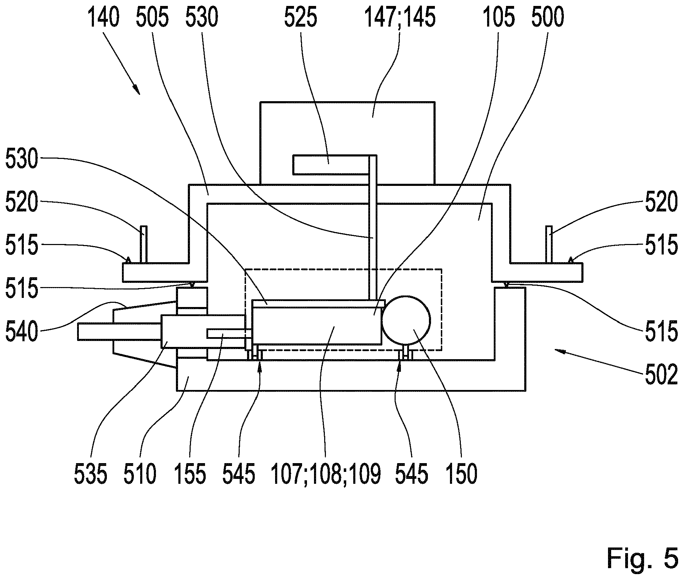

Gemäß diesem Ausführungsbeispiel ist die Entsperrvorrichtung 105 unterhalb des Gangwahlhebels 145 im Fahrzeug 100 verbaut. Die Verbindung zum Fahrzeuggetriebe 135 und somit zur Parksperre 110 erfolgt über den Seilzug 155. Die Seilzuganbindung und die Entsperrvorrichtung 105 sind zusammen akustisch entkoppelt, siehe hierzu Fig. 5, 15 und 16. Eine Übertragung der in der Entsperrvorrichtung 105 durch den Schalteinrichtungsmotor 150 erzeugten rotatorischen Bewegung in die translatorische Bewegung des Seilzuges 155 erfolgt durch die Exzentereinrichtung 107. Anders ausgedrückt wird mittels der Exzentereinrichtung 107 eine rotatorische Bewegung des Getriebes des Schalteinrichtungsmotors 150 in eine lineare Bewegung der Schiebereinheit 108 umgesetzt, die auch als Seilzugschieber bezeichnet werden kann.

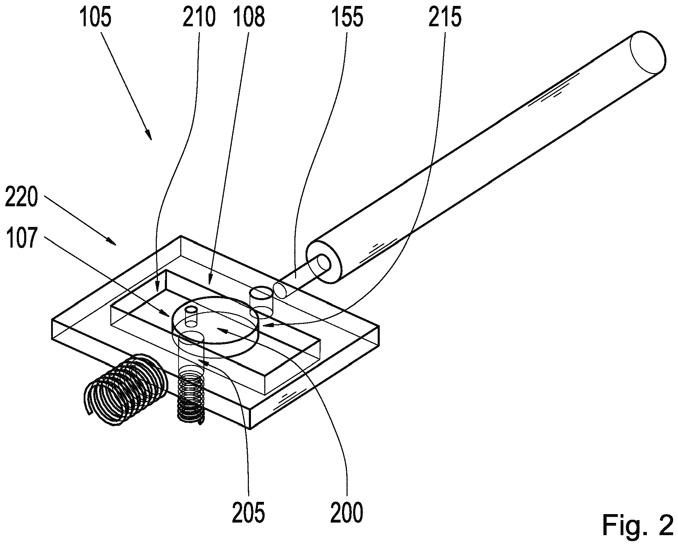

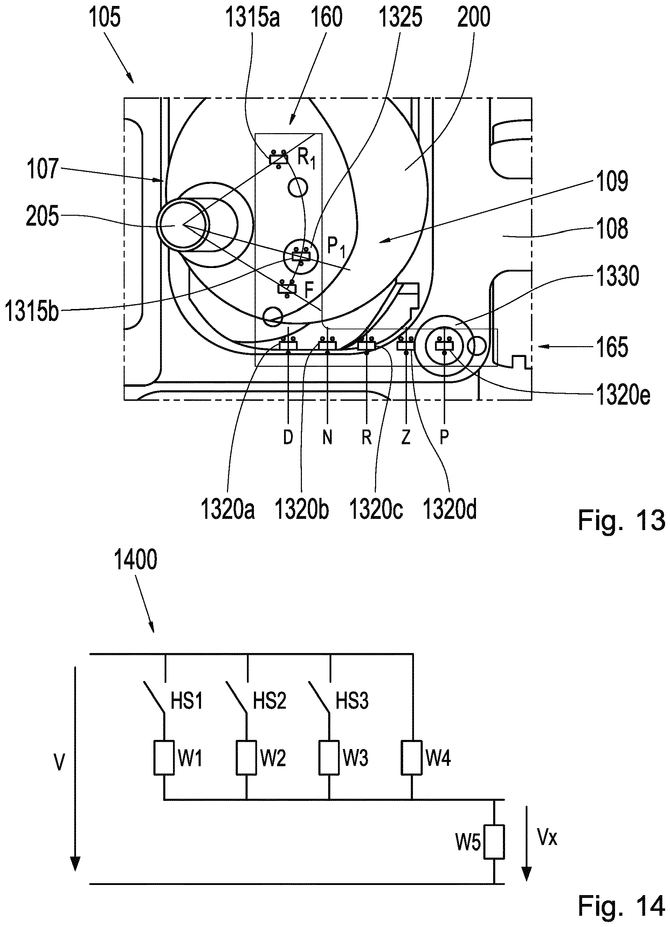

Figur 2 zeigt eine perspektivische Ansicht einer Entsperrvorrichtung 105 gemäß einem Ausführungsbeispiel. Dabei kann es sich um die anhand von Fig. 1 beschriebene Entsperrvorrichtung 105 handeln. Die zu der Entsperrvorrichtung 105 gehörende in Fig. 1 beschriebene Sensoreinrichtung ist gemäß diesem Ausführungsbeispiel nicht dargestellt und wird in Fig. 13 genauer beschrieben.

Gemäß diesem Ausführungsbeispiel weist die Exzentereinrichtung 107 einen kreisförmigen Abschnitt 200 und eine Exzenterachseneinrichtung 205 auf, die sich senkrecht zu einer Ebene des Abschnitts 200 erstreckt. Die Schiebereinheit 108 ist gemäß diesem Ausführungsbeispiel rechteckig ausgeformt und weist im Wesentlichen in einer Mitte eine rechteckige Durchgangsöffnung 210 auf, die auch als Kulissenöffnung bezeichnet werden kann. Der Abschnitt 200 ist gemäß diesem Ausführungsbeispiel in der hier dargestellten ersten Position 215 der Exzentereinrichtung 107 vollständig in der Schiebereinheit 108, gemäß diesem Ausführungsbeispiel in der Durchgangsöffnung 210 der Schiebereinheit 108, aufgenommen. Die Schiebereinheit 108 ist demnach in der Sperrposition 220 angeordnet.

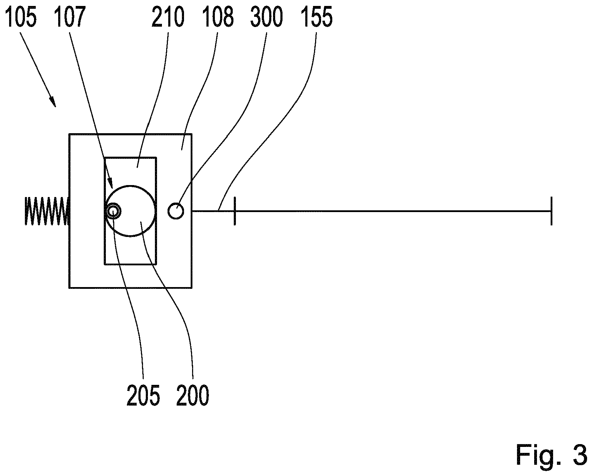

Figur 3 zeigt eine schematische Aufsicht auf eine Entsperrvorrichtung 105 gemäß einem Ausführungsbeispiel. Dabei kann es sich um die anhand von Fig. 2 beschriebene Entsperrvorrichtung 105 handeln. Gemäß diesem Ausführungsbeispiel weist die Schiebereinheit 108 eine Aufnahmeeinheit 300 auf, die dazu ausgebildet ist, um den Seilzug 155 aufzunehmen.

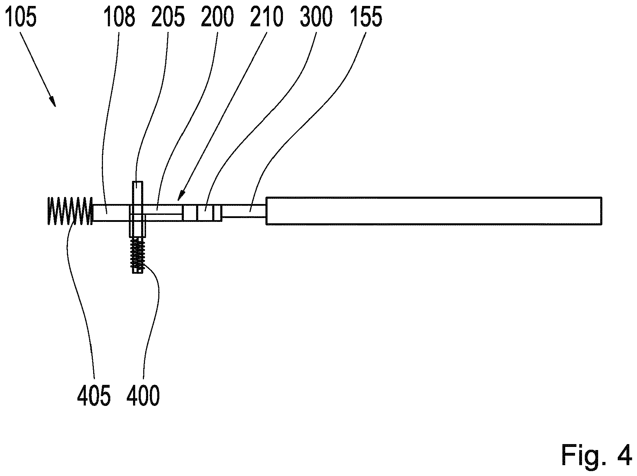

Figur 4 zeigt eine seitliche Querschnittdarstellung einer Entsperrvorrichtung 105 gemäß einem Ausführungsbeispiel. Dabei kann es sich um die anhand von Fig. 3 beschriebene Entsperrvorrichtung 105 handeln.

Zu erkennen ist in Fig. 4, dass die Exzenterachseneinrichtung 205 den Abschnitt 200 durchdringt und zu zwei Seiten aus der Ebene des Abschnitts 200 hervorsteht. Die Entsperrvorrichtung 105 weist gemäß diesem Ausführungsbeispiel eine Druckfeder 400 und eine Unterstützungsfeder 405 auf. Die Druckfeder 400 ist um einen Teilabschnitt der Exzenterachseneinrichtung 205 herum verlaufend angeordnet und in der hier dargestellten ersten Position der Exzentereinrichtung entspannt angeordnet. Gemäß diesem Ausführungsbeispiel ist der Abschnitt 200 dazu ausgeformt, um ansprechend auf die Betätigung die Linearbewegung entlang der Exzenterachseneinrichtung 205 in Richtung der Druckfeder 400 auszuführen, um die Druckfeder 400 zu spannen. Die Unterstützungsfeder 405 ist gemäß diesem Ausführungsbeispiel senkrecht zu der Druckfeder 400 angeordnet und übt eine Vorspannung auf die Schiebereinheit 108 aus, solange der Abschnitt 200 in der ersten Position angeordnet ist. Wenn der Abschnitt 200 ansprechend auf die Betätigung die Durchgangsöffnung 210 in Richtung der Druckfeder 400 komplett verlässt, führt die Schiebereinheit 108 gemäß diesem Ausführungsbeispiel angetrieben durch die Unterstützungsfeder 405 eine senkrecht zu der Linearbewegung verlaufende Seitwärtsbewegung aus.

Im Folgenden werden Details der Entsperrvorrichtung 105 noch einmal genauer ausgeführt. Die durch die Entsperrvorrichtung 105 ermöglichte Notentriegelung der Parksperre ist wie folgt realisiert: Der Entriegelungsvorgang wird durch die Übersetzungsfeder 405 unterstützt. Die Federkraft der Übersetzungsfeder 405 ist so dimensioniert, dass sie in der Lage wäre, die Parksperre auszulegen. Der Abschnitt 200 der Exzentereinrichtung ist axial verschiebbar gelagert und wird über die unterhalb angeordnete Druckfeder 400 in Nominalposition gehalten. Zum Entsperren der Parksperre wird in der Position "P" der Abschnitt 200 der Exzentereinrichtung aus der Durchgangsöffnung 210, die auch als Kulissenöffnung bezeichnet werden kann, herausgedrückt und die Schiebereinheit 108 kann sich dann, angetrieben durch die Unterstützungsfeder 405 verschieben. So wird die an der Schiebereinheit 108 angebrachte Parksperre über den Seilzug 155 ausgelegt. Das anschließende Wiedereinlegen der Parksperre erfolgt durch einen Initialisierungslauf der Entsperrvorrichtung 105, der im Werkstattbetrieb, oder bei KI15-wechsel gestartet werden kann. Das Verschieben der Exzenterachseneinrichtung 205 erfolgt durch einen Taster in Form der Betätigungseinrichtung, der akustisch entkoppelt an der Schalteinrichtung, gemäß diesem Ausführungsbeispiel am Gangwahlhebel oder gemäß einem alternativen Ausführungsbeispiel an einer in Fig. 5 gezeigten Adaptereinrichtung angebracht ist. Die Entkopplung wird über einen zu überbrückenden Luftspalt realisiert.

Figur 5 zeigt eine schematische Querschnittdarstellung einer Schalteinrichtung 140 mit einer Entsperrvorrichtung 105 gemäß einem Ausführungsbeispiel. Dabei kann es sich um die anhand von Fig. 1 beschriebene Schalteinrichtung 140 mit einer der anhand einer der Figuren 1 bis 4 beschriebenen Entsperrvorrichtungen 105 handeln. Der Innenraum 500 der Schalteinrichtung 140 ist gemäß diesem Ausführungsbeispiel von einer Adaptereinrichtung 502 umschlossen, die einen Adapter 505 und einen Deckel 510 aufweist. Zwischen dem Adapter 505 und dem Deckel 510 sowie im Bereich von Enden des Adapters 505 weist die Schalteinrichtung 140 gemäß diesem Ausführungsbeispiel eine Mehrzahl von Dichtungen 515 auf. Im Bereich der im Bereich der Enden des Adapters 505 angeordneten Dichtungen 515 weist die Adaptereinrichtung 502 gemäß diesem Ausführungsbeispiel zudem eine Mehrzahl von Stehbolzen 520 auf, die als Kundenschnittstellen dienen. Der Gangwahlhebel 145, der auch als Schaltung bezeichnet werden kann, weist gemäß diesem Ausführungsbeispiel eine Ansteuerelektronik 525 auf. Zwischen der Ansteuerelektronik 525 und dem im Innenraum 500 angeordneten Teil der Entsperrvorrichtung 105 ist gemäß diesem Ausführungsbeispiel eine Flex-Folie 530 zur Kontaktierung mit der Entsperrvorrichtung 105 angeordnet, wobei die Flex-Folie 530 hierzu eine Sensorik aufweist. Der Seilzug 155 ist gemäß diesem Ausführungsbeispiel teilweise von einer Ansatzschlauchfassung 535 ummantelt. In einem Bereich, in dem der Seilzug 155 und die Ansatzschlauchfassung 535 den Deckel 510 durchdringen, weist die Schalteinrichtung 140 eine Dichthülle 540 auf, die außerhalb des Deckels 510 an dem Deckel 510 anliegend angeordnet ist und die Ansatzschlauchfassung 535 dichtend umhüllt. Zwischen der Entsperrvorrichtung 105 und dem Deckel 510 sind gemäß diesem Ausführungsbeispiel zwei Dämpfungselemente 545 angeordnet, die dazu ausgebildet sind, um während des Entsperrens der Parksperre eine akustische Entkopplung zu bewirken.

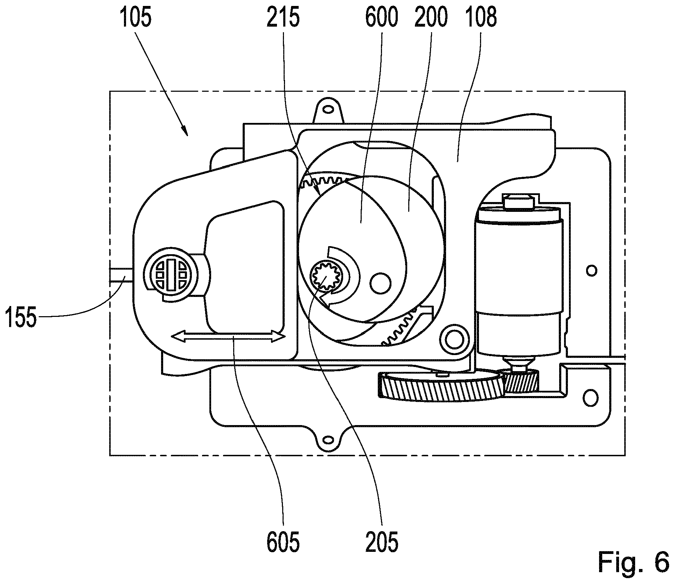

Figur 6 zeigt eine Aufsicht auf eine Entsperrvorrichtung 105 gemäß einem Ausführungsbeispiel. Hierbei kann es sich um die anhand von Fig. 4 beschriebene Entsperrvorrichtung 105 handeln. Gemäß diesem Ausführungsbeispiel weist der Abschnitt 200 der Exzentereinrichtung 107 ein Versatzelement 600 auf, das dazu ausgeformt ist, um ansprechend auf die Linearbewegung der Exzentereinrichtung 107 die senkrecht zu der Linearbewegung verlaufende Seitwärtsbewegung 605 der Schiebereinheit 108 zu begrenzen, wenn die Exzentereinrichtung 107 wie in Fig. 9 dargestellt, die Linearbewegung ausgeführt hat und in der zweiten Position angeordnet ist. Hierzu formt das Versatzelement 600 eine stufenförmige Erhöhung des Abschnitts 200 aus.

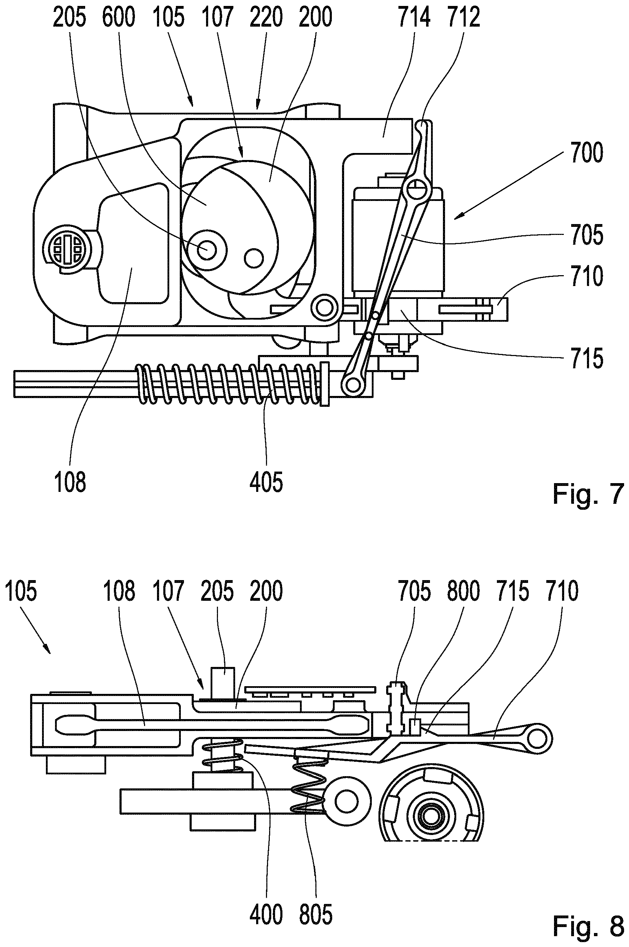

Figur 7 zeigt eine Aufsicht auf eine Entsperrvorrichtung 105 gemäß einem Ausführungsbeispiel. Hierbei kann es sich um die anhand von Fig. 6 beschriebene Entsperrvorrichtung 105 handeln, mit dem Unterschied, dass die Entsperrvorrichtung 105 gemäß diesem Ausführungsbeispiel eine Übersetzungseinrichtung 700 aufweist, die dazu ausgebildet, ist, um die Schiebereinheit 108 von der Sperrposition 220 in die in Fig. 9 dargestellte Entsperrposition zu übersetzen. Die Übersetzungseinrichtung 700 weist hierzu die Unterstützungsfeder 405 und gemäß diesem Ausführungsbeispiel zusätzlich eine Hebeleinrichtung 705 und eine Hakeneinrichtung 710 auf.

Die Unterstützungsfeder 405 ist gemäß diesem Ausführungsbeispiel angeordnet, um in der Sperrposition 220 der Schiebereinheit 108 eine Vorspannung auf die Hebeleinrichtung 705 der Übersetzungseinrichtung 700 auszuüben, wobei die Unterstützungsfeder 405 angeordnet ist, um ansprechend auf das Bewegen der Exzentereinrichtung 107 in die zweite Position, die Vorspannung freizugeben, um ein Überführen der Schiebereinheit 108 in die Entsperrposition zu ermöglichen.

Die Hebeleinrichtung 705 ist dazu ausgeformt, um ansprechend auf ein Freigeben der Vorspannung der Unterstützungsfeder 405 umgelegt zu werden, um die Schiebereinheit 108 in die Entsperrposition zu schieben. Hierzu weist die Hebeleinrichtung 705 gemäß diesem Ausführungsbeispiel eine Nase 712 auf, die an einem Vorsprung 714 der Schiebereinheit 108 anliegt.

Die Hakeneinrichtung 710 weist zumindest einen Haken 715 auf, der in der hier dargestellten ersten Position der Exzentereinrichtung 107 derart mit der Hebeleinrichtung 705 gekoppelt ist, dass ein Umlegen der Hebeleinrichtung 705 verhindert wird. Die Hakeneinrichtung 710 ist weiterhin angeordnet, um durch das Bewegen der Exzentereinrichtung 107 in die zweite Position durch die Exzentereinrichtung 107 derart ausgelenkt zu werden, dass der Haken 715 die Hebeleinrichtung 705 freigibt und die Hebeleinrichtung 705 angetrieben durch die Unterstützungsfeder 405 umgelegt wird.

Zu sehen ist in Fig. 7 eine Notentriegelung über Versatz. Eine Exzenterwelle der Exzenterachseneinrichtung 205 ist axial verschiebbar gelagert. Beim Entsperren der Parksperre wird die Exzentereinrichtung 107/die Exzenterwelle in ihrer Achsrichtung linear verschoben. Der Abschnitt 200 der Exzentereinrichtung 107 ist zweistufig mit dem Versatzelement 600 ausgeführt. Das Versatzelement 600 dient als Wegbegrenzung der Schiebereinheit 108, welche über die Übersetzungsfeder 405, die auch als Notentriegelungsfeder bezeichnet werden kann und die Hebeleinrichtung 705, die auch als Übersetzungshebel bezeichnet werden kann, betätigt wird.

Figur 8 zeigt eine seitliche Querschnittdarstellung einer Entsperrvorrichtung 105 gemäß einem Ausführungsbeispiel. Hierbei kann es sich um die anhand von Fig. 7 beschriebene Entsperrvorrichtung 105 handeln. Zu erkennen ist in Fig. 8, dass der Haken 715 an einer Fläche 800 der Hebeleinrichtung 705 anliegt und so das Umlegen der Hebeleinrichtung 705 in der ersten Position der Exzentereinrichtung 107 formschlüssig verhindert. Die Hakeneinrichtung 710 weist gemäß diesem Ausführungsbeispiel eine Hakeneinrichtungsfeder 805 auf.

Figur 9 zeigt eine Aufsicht auf eine Entsperrvorrichtung 105 gemäß einem Ausführungsbeispiel. Hierbei kann es sich um die anhand von Fig. 8 beschriebene Entsperrvorrichtung 105 handeln, mit dem Unterschied, dass die Exzentereinrichtung 107 durch die Betätigung in die zweite Position 900 bewegt wurde und die Schiebereinheit 108 daraufhin in die Entsperrposition 905 überführt wurde, wodurch die Parksperre entsperrt ist. Der Haken 715 wurde durch die Linearbewegung des Abschnitts 200 von der Fläche 800 weggedrückt, wodurch die Hebeleinrichtung 705 durch die Übersetzungsfeder 405 umgelegt wurde und mit der Nase 712 durch einen Druck auf den Vorsprung 714 die Schiebereinheit 108 in die Entsperrposition 905 gedrückt hat. In der Entsperrposition 905 hat die Schiebereinheit 108 die Seitwärtsbewegung ausgeführt und liegt nun mit einem Rand 910 der Durchgangsöffnung an einer Seite des Versatzelements 600 an.

Anders ausgedrückt erfolgt ein Antrieb zum Entsperren der Parksperre gemäß diesem Ausführungsbeispiel über die Übersetzungsfeder 405. Hierbei wird die in der vorgespannten Übersetzungsfeder 405 gespeicherte Energie mittels der Hebeleinrichtung 705 auf die Schiebereinheit 108 übertragen. Ein Wiederaufladen der Übersetzungsfeder 405 erfolgt über den Motor, das Getriebe und die Exzentereinrichtung 107 oder über eine weitere Mechanik, z. B. einen externen Hebel.

Figur 10 zeigt eine seitliche Querschnittdarstellung einer Entsperrvorrichtung 105 gemäß einem Ausführungsbeispiel. Hierbei kann es sich um die anhand von Fig. 9 beschriebene Entsperrvorrichtung 105 handeln. Zu erkennen ist in Fig. 10, dass der Abschnitt 200 durch die Linearbewegung die Hakeneinrichtung 710 derart von der Hebeleinrichtung 705 weggedrückt hat, dass der Haken 715 von der Fläche wegbewegt wurde und das Umlegen der Hebeleinrichtung 705 so ermöglicht wurde.

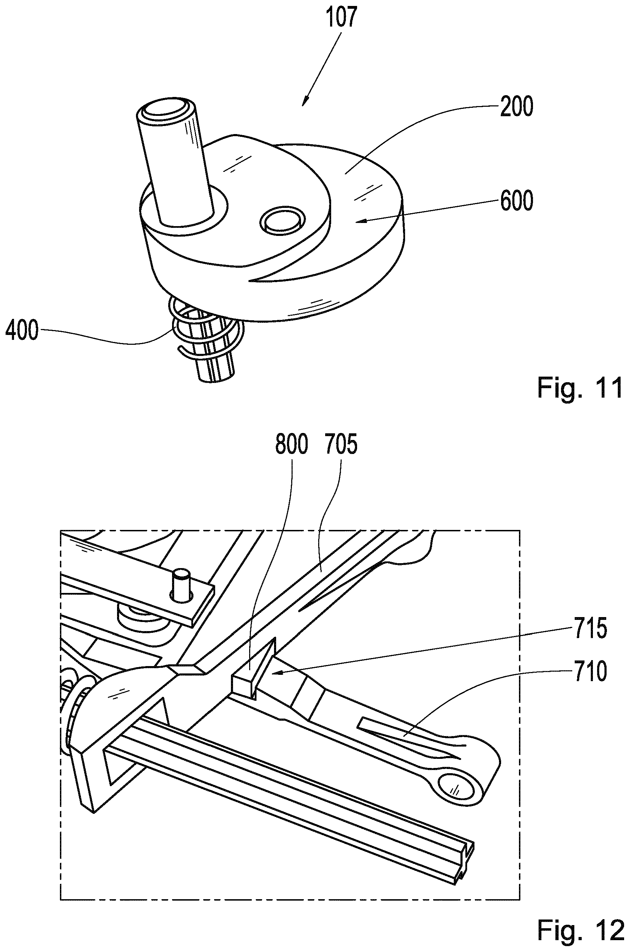

Figur 11 zeigt eine perspektivische Darstellung einer Exzentereinrichtung 107 mit einem Versatzelement 600 gemäß einem Ausführungsbeispiel. Hierbei kann es sich um die anhand von einer der Figuren 6 bis 10 beschriebene Exzentereinrichtung 107 handeln.

Figur 12 zeigt eine perspektivische Aufsicht auf eine Hakeneinrichtung 710 gemäß einem Ausführungsbeispiel. Hierbei kann es sich um die anhand einer der Figuren 7 und 8 beschriebene Hakeneinrichtung 710 handeln, bei der der Haken 715 an der Fläche 800 der Hebeleinrichtung 705 anliegt und somit in der ersten Position der Exzentereinrichtung das Umlegen der Hebeleinrichtung 705 formschlüssig verhindert.

In einem Normalbetrieb, also wenn die Sparksperre nicht durch die Entsperrvorrichtung entsperrt wurde, wird die Notentriegelung wie folgt gesichert:
In einem der Normalbetriebe P R N D wird die Übersetzungsfeder 405 oder die Hebeleinrichtung 705 nach dem Aufladen über einen Sperrmechanismus, z. B. einen mechanisch gesicherter Sperrriegel wie die hier vorgestellte Hakeneinrichtung 710 und/oder einen Sperrhebel über Haftmagnet und/oder einen Sperrmagnet gesichert, wodurch eine dauerhafte Belastung von Motor, Getriebe, Exzentereinrichtung und Schiebereinheit 108 vermieden wird.

In den Betrieben N D wird die Exzentereinrichtung wie folgt gesichert: In Position N und D wird die lineare Bewegung der Exzentereinrichtung/der Exzenterwelle verhindert, um ein ungewolltes Betätigen der Entsperrvorrichtung, z. B. durch Schwingbelastung, zu vermeiden. Eine Lagerung ist dabei in drei Bereiche getrennt: einen Drehmoment-Teil, einen Last-Teil und eine Abdeckung.

Figur 13 zeigt eine Aufsicht auf eine Entsperrvorrichtung 105 mit einer Sensoreinrichtung 109 gemäß einem Ausführungsbeispiel. Dabei kann es sich bei der Entsperrvorrichtung 105 um eine der anhand einer der vorangegangenen Figuren beschriebenen Entsperrvorrichtungen 105 handeln. Wie in Fig. 1 bereits angesprochen, ist die Sensoreinrichtung 109 dazu ausgebildet, um zumindest eine in der Schiebereinheit 108 aufgenommene oder im Bereich der Schiebereinheit 108 angeordnete Stellung der Exzentereinrichtung 107 zu erkennen. Gemäß diesem Ausführungsbeispiel ist die Sensoreinrichtung 109 dazu ausgebildet, um eine Stellung der Exzentereinrichtung 107 zu erkennen, die eine in der zweiten Position angeordnete Exzentereinrichtung 107 repräsentiert, um eine durch die Entsperrvorrichtung 105 entsperrte Parksperre zu erkennen. Gemäß diesem Ausführungsbeispiel jedoch ist die Exzentereinrichtung 107 in der ersten Position angeordnet. Die Sensoreinrichtung 109 weist die an der Exzentereinrichtung 107 angeordnete Antriebssensoreinrichtung 160 und die an der Schiebereinheit 108 angeordnete Schiebersensoreinrichtung 165 auf.

Gemäß diesem Ausführungsbeispiel ist die Sensoreinrichtung 109 zum Erkennen der Stellung dazu ausgebildet, um eine Antriebssensorposition eines Antriebssensors 1315 der Antriebssensoreinrichtung 160 und eine Schiebersensorposition eines Schiebersensors 1320 der Schiebersensoreinrichtung 165 zu vergleichen, um die Stellung zu erkennen. Gemäß diesem Ausführungsbeispiel weist die Antriebssensoreinrichtung 160 eine Mehrzahl von Antriebssensoren 1315a; 1315b auf, die bogenförmig auf dem Abschnitt 200 um die Exzenterachseneinrichtung 205 herum angeordnet sind und die Schiebersensoreinrichtung 165 weist eine Mehrzahl von Schiebersensoren 1320a; 1320b; 1320c; 1320d; 1320e auf, die linear angeordnet sind. Gemäß diesem Ausführungsbeispiel ist zumindest eine Antriebssensorposition eines Antriebssensors 1315 der Antriebssensoreinrichtung 160 einer Schiebersensorposition eines Schiebersensors 1320 der Schiebersensoreinrichtung 165 zugeordnet, wobei die Stellung erkannt wird, wenn die Antriebssensorposition nicht in einem vorgestimmten Verhältnis zu der zugeordneten Schiebersensorposition angeordnet ist. Gemäß diesem Ausführungsbeispiel ist die Antriebssensorposition des Antriebssensors 1315a der Schiebersensorposition des Schiebersensors 1320c zugeordnet, was einer Gangwahlhebeleinstellung des Gangwahlhebels im Gang R entspricht. Gemäß diesem Ausführungsbeispiel ist die Antriebssensorposition des Antriebssensors 1315b der Schiebersensorposition des Schiebersensors 1320e zugeordnet, was einer Gangwahlhebeleinstellung des Gangwahlhebels im Gang P entspricht. Gemäß diesem Ausführungsbeispiel ist eine Antriebssensorposition eines der Antriebssensoren 1315 im Verhältnis zu einer zugeordneten Schiebersensorposition eines der Schiebersensoren 1320 angeordnet, die Stellung wird somit gemäß diesem Ausführungsbeispiel von der Sensoreinrichtung 109 nicht erkannt.

Gemäß diesem Ausführungsbeispiel sind die Antriebssensoren 1315a; 1315b und die Schiebersensoren 1320a; 1320b; 1320c; 1320d; 1320e; zumindest teilweise als Magnetsensoren ausgeformt. Gemäß einem alternativen Ausführungsbeispiel ist zumindest einer der Antriebssensoren 1315 und/oder einer der Schiebersensoren 1320 zumindest teilweise als ein Magnetsensor ausgeformt. Zum Erkennen der zumindest einen zugeordneten Position weist die Antriebssensoreinrichtung 160 einen Exzentermagneten 1325 und die Schiebersensoreinrichtung 165 einen Schiebermagneten 1330 auf.

Bei dem hier vorgestellten Sensorkonzept befinden sich bedämpfende Elemente für die Sensorik in Form der Schiebersensoreinrichtung 165 und der Antriebssensoreinrichtung 160 sowohl an der Schiebereinheit 108 als auch an der Exzentereinrichtung 107.

Redundanz für Position P und R: Die Notfunktion wird gemäß diesem Ausführungsbeispiel durch die Antriebssensoren 1315 an der Exzentereinrichtung 107 erkannt, wenn kein Signal vorliegt. Die Normalfunktion wird durch die Antriebssensoren 1315/den Antriebssensor 1315a an der Exzentereinrichtung 107 erkannt. Eine Feder-Position F ist zum Abschalten des Motors bei einem Vorgang "Feder spannen"

Figur 14 zeigt eine Darstellung einer Verschaltung 1400 von Sensoren gemäß einem Ausführungsbeispiel. Dabei kann es sich um eine Verschaltung 1400 der anhand von Fig. 13 beschriebenen Schiebersensoren und Antriebssensoren handeln.

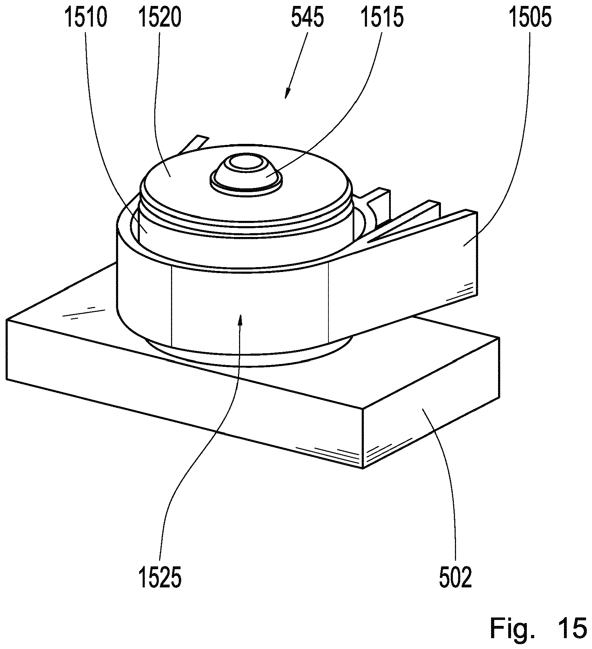

Figur 15 zeigt eine perspektivische Ansicht eines Dämpfungselements 545 gemäß einem Ausführungsbeispiel. Dabei kann es sich um das in Fig. 5 beschriebene Dämpfungselement 545 handeln. Das Dämpfungselement 545 ist dazu ausgebildet, um beim Entsperren der Parksperre zumindest ein Geräusch der anhand einer der Figuren 1 bis 10 oder 13 beschriebenen Entsperrvorrichtungen akustisch zu dämpfen. Das Dämpfungselement 545 ist gemäß diesem Ausführungsbeispiel Teil der Entsperrvorrichtung und zwischen einem Gehäuse 1505 der Entsperrvorrichtung und der Adaptereinrichtung 502 der in Fig. 5 beschriebenen Schalteinrichtung angeordnet. Das Dämpfungselement 545 weist gemäß diesem Ausführungsbeispiel einen Dämpfkörper 1510 mit einer Öffnung, eine selbstschneidende Schraube 1515 und eine Unterlegscheibe 1520 auf.

Die Öffnung nimmt einen Dom 1525 der Adaptereinrichtung 502 auf. Die selbstschneidende Schraube 1515 ist in den Dom 1525 der Adaptereinrichtung 502 eingeschraubt, um das Gehäuse 1505 der Entsperrvorrichtung an der Adaptereinrichtung 502 zu fixieren. Gemäß diesem Ausführungsbeispiel ist das Dämpfungselement 545 in einem ringförmigen Gehäuseabschnitt des Gehäuses 1505 aufgenommen.

Das Dämpfungselement 545 ermöglicht eine akustische Kapselung unter einem Bodenblech im Modul. Die Entsperrvorrichtung befindet sich unterhalb des Bodenblechs in der Adaptereinrichtung 502 und wird akustisch entkoppelt, um eine Geräuschbildung zu vermeiden. Die Entkopplung erfolgt über das oder eine Mehrzahl von Dämpfungselementen 545, welche zwischen der Entsperrvorrichtung und der Adaptereinrichtung 502 eine Schwingungsübertragung vermeiden. Anders als bei bekannten Entsperrvorrichtungen kommt bei dem hier vorgestellten Dämpfungselement 545 vorteilhafterweise eine selbstschneidende Schraube 1515 für Kunststoff zum Einsatz. Diese wird in einen angespritzten Dom 1525 geschraubt, der sich an der Adaptereinrichtung 502 befindet, die mit der Entsperrvorrichtung verschraubt wird.

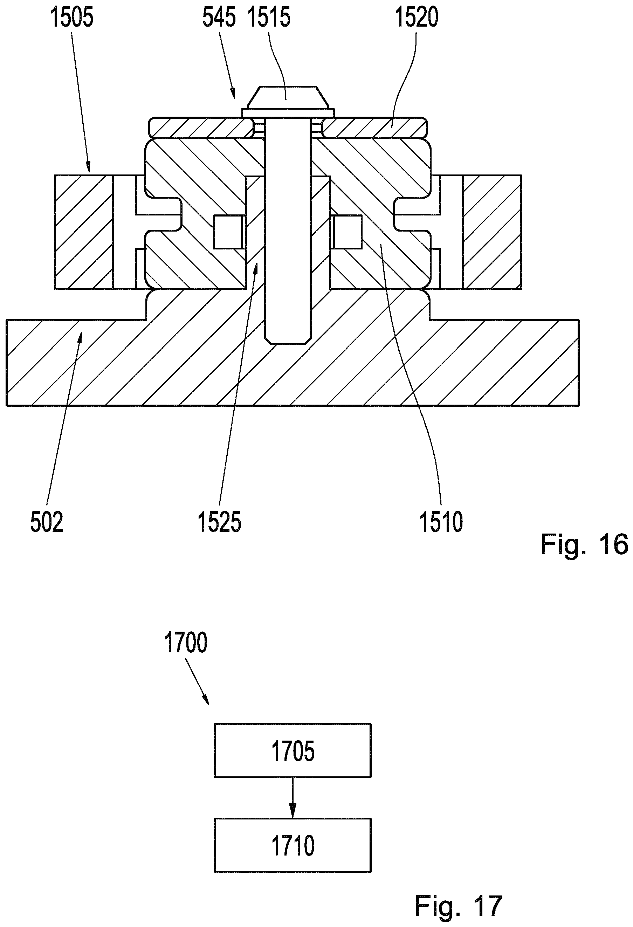

Figur 16 zeigt eine seitliche Querschnittsdarstellung eines Dämpfungselements 545 gemäß einem Ausführungsbeispiel. Dabei kann es sich um das anhand von Fig. 15 beschriebene Dämpfungselement 545 handeln.

Figur 17 zeigt ein Ablaufdiagramm eines Verfahrens 1700 zum Sensieren zumindest einer Stellung einer Antriebseinheit in einer oder im Bereich einer Schiebereinheit einer Entsperrvorrichtung gemäß einem Ausführungsbeispiel, welches nicht Bestandteil der vorliegenden Erfindung ist, Dabei kann es sich um ein Verfahren 1700 zum Sensieren der zumindest einen Stellung einer Antriebseinheit in einer oder im Bereich einer Schiebereinheit einer der anhand einer der Figuren 1 bis 10 oder 13 beschriebenen Entsperrvorrichtungen handeln. Das Verfahren 1700 weist zumindest einen Schritt 1705 des Einlesens und einen Schritt 1710 des Erkennens auf. Im Schritt 1705 des Einlesens werden ein Antriebssensorsignal und ein Schiebersensorsignal von der Sensoreinrichtung der Entsperrvorrichtung eingelesen. Im Schritt 1710 des Erkennens wird die Stellung der Antriebseinheit in der oder im Bereich der Schiebereinheit unter Verwendung des Antriebssensorsignals und des Schiebersensorsignals erkannt.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichen

- 100: Fahrzeug
- 105: Entsperrvorrichtung
- 106: Antriebseinheit
- 107: Exzentereinrichtung
- 108: Schiebereinheit
- 109: Sensoreinrichtung
- 110: Parksperre
- 127: Rad
- 130: Motor
- 135: Fahrzeuggetriebe
- 140: Schalteinrichtung
- 145: Gangwahlhebel
- 147: Betätigungseinrichtung
- 150: Schalteinrichtungsmotor
- 155: Seilzug
- 160: Antriebssensoreinrichtung
- 165: Schiebersensoreinrichtung
- 200: Abschnitt
- 205: Exzenterachseneinrichtung
- 210: Durchgangsöffnung
- 215: erste Position
- 220: Sperrposition
- 300: Aufnahmeeinheit
- 400: Druckfeder
- 405: Unterstützungsfeder
- 500: Innenraum
- 502: Adaptereinrichtung
- 505: Adapter
- 510: Deckel
- 515: Dichtung
- 520: Stehbolzen
- 525: Ansteuerelektronik
- 530: Flex-Folie
- 535: Ansatzschlauchfassung
- 540: Dichthülle
- 545: Dämpfungselement
- 600: Versatzelement
- 605: Seitwärtsbewegung
- 700: Übersetzungseinrichtung
- 705: Hebeleinrichtung
- 710: Hakeneinrichtung
- 712: Nase
- 714: Vorsprung
- 715: Haken
- 800: Fläche
- 805: Hakeneinrichtungsfeder
- 900: zweite Position
- 905: Entsperrposition
- 910: Rand
- 1315: Antriebssensor
- 1315a: Antriebssensor
- 1315b: Antriebssensor
- 1320: Schiebersensor
- 1320a: Schiebersensor
- 1320b: Schiebersensor
- 1320c: Schiebersensor
- 1320d: Schiebersensor
- 1320e: Schiebersensor
- 1325: Exzentermagnet
- 1330: Schiebermagnet
- 1400: Verschaltung
- 1505: Gehäuse
- 1510: Dämpfkörper
- 1515: selbstschneidende Schraube
- 1520: Unterlegscheibe
- 1525: Dom
- 1700: Verfahren
- 1705: Schritt des Bewegens
- 1710: Schritt des Übersetzens

## Patentansprüche

1. Entsperrvorrichtung (105) zum Erkennen zumindest einer Stellung einer Antriebseinheit (106) in einer oder im Bereich einer Schiebereinheit (108) für ein Fahrzeug (100), wobei die Entsperrvorrichtung (105) zumindest die folgenden Merkmale aufweist:
- die Antriebseinheit (106), die in einer ersten Position (215) zumindest teilweise in der Schiebereinheit (108) der Entsperrvorrichtung (105) angeordnet oder anordenbar ist, um eine Parksperre (110) des Fahrzeugs (100) zu sperren oder einzulegen, und die in einer zweiten Position (900) zumindest teilweise aus der Schiebereinheit (108) herausbewegt angeordnet ist, um die Parksperre (110) zu entsperren oder auszulegen;
- die Schiebereinheit (108), die dazu ausgeformt ist, um die Antriebseinheit (106) zumindest in der ersten Position (215) der Antriebseinheit (106) zumindest teilweise aufzunehmen; und
- eine Sensoreinrichtung (109), die zumindest eine an der Antriebseinheit (106) angeordnete Antriebssensoreinrichtung (160) und/oder eine an der Schiebereinheit (108) angeordnete Schiebersensoreinrichtung (165) aufweist, wobei die Sensoreinrichtung (109) dazu ausgebildet ist, um zumindest eine/die in der Schiebereinheit (108) aufgenommene oder im Bereich der Schiebereinheit (108) angeordnete Stellung der Antriebseinheit (106) zu erkennen,
**dadurch gekennzeichnet, dass** die Antriebseinheit (106) als eine Exzentereinrichtung (107) ausgeformt ist, die Entsperrvorrichtung (105) mit einer Betätigungseinrichtung (147) ausgestattet ist, die dazu ausgebildet ist, um ansprechend auf eine Betätigung der Betätigungseinrichtung (147) die Exzentereinrichtung (107) von der ersten Position (215) in die zweite Position (900) zu bewegen, und ein in die Schiebereinheit (108) aufgenommener Abschnitt (200) der Exzentereinrichtung (107) dazu ausgeformt ist, um ansprechend auf die Betätigung der Betätigungseinrichtung (147) eine Linearbewegung entlang einer Exzenterachseneinrichtung (205) der Exzentereinrichtung (107), die sich senkrecht zu einer Ebene des Abschnitts (200) erstreckt, auszuführen.

2. Entsperrvorrichtung (105) gemäß Anspruch 1, bei der die Sensoreinrichtung (109) dazu ausgebildet ist, wenn die Sensoreinrichtung (109) eine an der Antriebseinheit (106) angeordnete Antriebssensoreinrichtung (160) aufweist, um eine Antriebssensorposition eines Antriebssensors (1315) der Antriebssensoreinrichtung (160) und/oder wenn die Sensoreinrichtung (109) eine an der Schiebereinheit (108) angeordnete Schiebersensoreinrichtung (165) aufweist, eine Schiebersensorposition eines Schiebersensors (1320) der Schiebersensoreinrichtung (165) zu vergleichen, um die Stellung zu erkennen.

3. Entsperrvorrichtung (105) gemäß einem der vorangegangenen Ansprüche, bei der wenn die Sensoreinrichtung (109) eine an der Antriebseinheit (106) angeordnete Antriebssensoreinrichtung (160) aufweist, die Antriebssensoreinrichtung (160) eine Mehrzahl von Antriebssensoren (1315) aufweist, die bogenförmig angeordnet sind und/oder wenn die Sensoreinrichtung (109) eine an der Schiebereinheit (108) angeordnete Schiebersensoreinrichtung (165) aufweist, die Schiebersensoreinrichtung (165) eine Mehrzahl von Schiebersensoren (1320) aufweist, die linear angeordnet sind.

4. Entsperrvorrichtung (105) gemäß einem der vorangegangenen Ansprüche, bei der die Sensoreinrichtung (109) zumindest eine an der Antriebseinheit (106) angeordnete Antriebssensoreinrichtung (160) und eine an der Schiebereinheit (108) angeordnete Schiebersensoreinrichtung (165) aufweist, und bei der zumindest eine Antriebssensorposition eines Antriebssensors (1315) der Antriebssensoreinrichtung (160) einer Schiebersensorposition eines Schiebersensors (1320) der Schiebersensoreinrichtung (165) zugeordnet ist, insbesondere wobei die Stellung erkannt wird, wenn die Antriebssensorposition nicht in einem vorgestimmten Verhältnis zu der zugeordneten Schiebersensorposition angeordnet ist.

5. Entsperrvorrichtung (105) gemäß einem der vorangegangenen Ansprüche, bei der zumindest ein Antriebssensor (1315) der Antriebssensoreinrichtung (160) und/oder ein Schiebersensor (1320) der Schiebersensoreinrichtung (165) zumindest teilweise als Magnetsensor ausgeformt ist.

6. Entsperrvorrichtung (105) gemäß einem der vorangegangenen Ansprüche, bei der die Schiebereinheit (108) über ein Übertragungselement (155), insbesondere einen Seilzug (155), mit der Parksperre (110) gekoppelt oder koppelbar ist, wobei die Schiebereinheit (108) dazu ausgeformt ist, um in einer Sperrposition (220) das Übertragungselement (155) in einer Parksperrposition zu positionieren, um die Parksperre (110) zu sperren oder einzulegen, wenn die Exzentereinrichtung (107) in der ersten Position (215) angeordnet ist und ansprechend auf ein Bewegen der Exzentereinrichtung (107) in die zweite Position (900) in eine Entsperrposition (905) überzugehen, in der die Schiebereinheit (108) das Übertragungselement (155) in einer Parkentsperrposition positioniert, um die Parksperre (110) zu entsperren oder auszulegen.

7. Entsperrvorrichtung (105) gemäß einem der vorangegangenen Ansprüche, bei der der Abschnitt (200) der Exzentereinrichtung (107) ein Versatzelement (600) aufweist, das dazu ausgeformt ist, um ansprechend auf die Linearbewegung der Exzentereinrichtung (107) eine senkrecht zu der Linearbewegung verlaufende Seitwärtsbewegung (605) der Schiebereinheit (108) zu begrenzen.

8. Entsperrvorrichtung (105) gemäß einem der vorangegangenen Ansprüche, bei der die Exzentereinrichtung (107) zumindest eine Druckfeder (400) aufweist, die in der ersten Position (215) der Exzentereinrichtung (107) entspannt ist und die angeordnet ist, um ansprechend auf die Betätigung durch zumindest eine Komponente der Exzentereinrichtung (107) gespannt zu werden.

9. Entsperrvorrichtung (105) gemäß einem der vorangegangenen Ansprüche, mit einer Übersetzungseinrichtung (700), die dazu ausgebildet, ist, um die Schiebereinheit (108) von der Sperrposition (220) in die Entsperrposition (905) zu übersetzen, wobei die Übersetzungseinrichtung (700) zumindest eine Unterstützungsfeder (405) aufweist, die angeordnet ist, um in der Sperrposition (220) der Schiebereinheit (108) eine Vorspannung auf die Schiebereinheit (108) und/oder eine Hebeleinrichtung (712) der Übersetzungseinrichtung (700) auszuüben, wobei die Unterstützungsfeder (405) angeordnet ist, um ansprechend auf das Bewegen der Exzentereinrichtung (107) in die zweite Position (900), die Vorspannung freizugeben, um ein Überführen der Schiebereinheit (108) in die Entsperrposition (905) zu ermöglichen.

10. Entsperrvorrichtung (105) gemäß Anspruch 9, bei der die Ubersetzungseinrichtung (700) zumindest die Hebeleinrichtung (712) aufweist, die dazu ausgeformt ist, um ansprechend auf ein Freigeben der Vorspannung der Unterstützungsfeder (405) umgelegt zu werden, um die Schiebereinheit (108) in die Entsperrposition (905) zu schieben.

11. Entsperrvorrichtung (105) gemäß Anspruch 10 bei der die Ubersetzungseinrichtung (700) zumindest eine Hakeneinrichtung (710) mit zumindest einem Haken (715) aufweist, der in der ersten Position (215) der Exzentereinrichtung (107) derart mit der Hebeleinrichtung (712) gekoppelt ist, dass ein Umlegen der Hebeleinrichtung (712) verhindert wird, wobei die Hakeneinrichtung (710) angeordnet ist, um durch das Bewegen der Exzentereinrichtung (107) in die zweite Position (900) durch die Exzentereinrichtung (107) derart ausgelenkt zu werden, dass der Haken (715) die Hebeleinrichtung (712) freigibt und die Hebeleinrichtung (712) angetrieben durch die Unterstützungsfeder (405) umgelegt wird.

12. Entsperrvorrichtung (105) gemäß einem der vorangegangenen Ansprüche, mit zumindest einem Dämpfungselement (545), das dazu ausgebildet ist, um zumindest ein Geräusch der Entsperrvorrichtung (105) akustisch zu dämpfen, wobei das Dämpfungselement (545) zumindest eine Öffnung aufweist, die dazu ausgeformt ist, um einen Dom (1525) einer Adaptereinrichtung (502) aufzunehmen, wobei das Dämpfungselement (545) zumindest eine selbstschneidende Schraube (1515) aufweist, die dazu ausgeformt ist, um in den Dom (1525) der Adaptereinrichtung (502) eingeschraubt zu werden, um die Entsperrvorrichtung (105) an der Adaptereinrichtung (502) zu fixieren, wenn das Dämpfungselement (545) von dem Dom (1525) aufgenommen ist.

## Claims

1. Unlocking apparatus (105) for the detection of at least one position of a drive unit (106) in a slide unit (108) or in the region of a slide unit (108) for a vehicle (100), the unlocking apparatus (105) having at least the following features:
- the drive unit (106) which, in a first position (215), is arranged or can be arranged at least partially in the slide unit (108) of the unlocking apparatus (105), in order to lock or engage a parking lock (110) of the vehicle (100), and which, in a second position (900), is arranged such that it is moved at least partially out of the slide unit (108), in order to unlock or disengage the parking lock (110);
- the slide unit (108) which is formed to receive the drive unit (106) at least partially at least in the first position (215) of the drive unit (106); and
- a sensor device (109) which has at least one drive sensor device (160) which is arranged on the drive unit (106) and/or one slide sensor device (165) which is arranged on the slide unit (108), the sensor device (109) being configured to detect at least one/the position of the drive unit (106), which is received in the slide unit (108) or is arranged in the region of the slide unit (108),
**characterized**
**in that** the drive unit (106) is formed as an eccentric device (107), the unlocking apparatus (105) is equipped with an actuating device (147) which is configured to move the eccentric device (107) from the first position (215) into the second position (900) in response to an actuation of the actuating device (147),
and a portion (200) of the eccentric device (107), which portion (200) is received in the slide unit (108), is formed to carry out a linear movement along an eccentric axle device (205) of the eccentric device (107) which extends perpendicularly with respect to a plane of the portion (200), in response to the actuation of the actuating device (147).

2. Unlocking apparatus (105) according to Claim 1, in the case of which the sensor device (109) is configured, if the sensor device (109) has a drive sensor device (160) which is arranged on the drive unit (106), to compare a drive sensor position of a drive sensor (1315) of the drive sensor device (160) and/or, if the sensor device (109) has a slide sensor device (165) which is arranged on the slide unit (108), to compare a slide sensor position of a slide sensor (1320) of the slide sensor device (165), in order to detect the position.

3. Unlocking apparatus (105) according to either of the preceding claims, in the case of which, if the sensor device (109) has a drive sensor device (160) which is arranged on the drive unit (106), the drive sensor device (160) has a plurality of drive sensors (1315) which are arranged in an arcuate manner, and/or, if the sensor device (109) has a slide sensor device (165) which is arranged on the slide unit (108), the slide sensor device (165) has a plurality of slide sensors (1320) which are arranged in a linear manner.

4. Unlocking apparatus (105) according to one of the preceding claims, in the case of which the sensor device (109) has at least one drive sensor device (160) which is arranged on the drive unit (106) and one slide sensor device (165) which is arranged on the slide unit (108), and in the case of which at least one drive sensor position of a drive sensor (1315) of the drive sensor device (160) is assigned to a slide sensor position of a slide sensor (1320) of the slide sensor device (165), the position being detected, in particular, if the drive sensor position is not arranged in a predefined relationship with the associated slide sensor position.

5. Unlocking apparatus (105) according to one of the preceding claims, in the case of which at least one drive sensor (1315) of the drive sensor device (160) and/or one slide sensor (1320) of the slide sensor device (165) are/is formed at least partially as a magnetic sensor.

6. Unlocking apparatus (105) according to one of the preceding claims, in the case of which the slide unit (108) is coupled or can be coupled to the parking lock (110) via a transmission element (155), in particular a control cable (155), the slide unit (108) being formed, in a locking position (220), to position the transmission element (155) in a parking lock position, in order to lock or to engage the parking lock (110), if the eccentric device (107) is arranged in the first position (215), and to transfer into an unlocking position (905) in response to a movement of the eccentric device (107) into the second position (900), in which unlocking position (905) the slide unit (108) positions the transmission element (155) in a parking unlocking position, in order to unlock or to disengage the parking lock (110).

7. Unlocking apparatus (105) according to one of the preceding claims, in the case of which the portion (200) of the eccentric device (107) has an offset element (600) which is formed, in response to the linear movement of the eccentric device (107), to limit a sideward movement (605) of the slide unit (108), which sideward movement (605) runs perpendicularly with respect to the linear movement.

8. Unlocking apparatus (105) according to one of the preceding claims, in the case of which the eccentric device (107) has at least one compression spring (400) which is relieved in the first position (215) of the eccentric device (107) and which is arranged to be stressed in response to the actuation by way of at least one component of the eccentric device (107).

9. Unlocking apparatus (105) according to one of the preceding claims, with a transmission device (700) which is configured to transfer the slide unit (108) from the locking position (220) into the unlocking position (905), the transmission device (700) having at least one assisting spring (405) which is arranged to exert a prestress on the slide unit (108) and/or a lever device (712) of the transmission device (700) in the locking position (220) of the slide unit (108), the assisting spring (405) being arranged to release the prestress in response to the movement of the eccentric device (107) into the second position (900), in order to make a transfer of the slide unit (108) into the unlocking position (905) possible.

10. Unlocking apparatus (105) according to Claim 9, in the case of which the transmission device (700) has at least the lever device (712) which is formed to be flipped in response to a release of the prestress of the assisting spring (405), in order to push the slide unit (108) into the unlocking position (905).

11. Unlocking apparatus (105) according to Claim 10, in the case of which the transmission device (700) has at least one hook device (710) with at least one hook (715) which, in the first position (215) of the eccentric device (107), is coupled to the lever device (712) in such a way that flipping of the lever device (712) is prevented, the hook device (710) being arranged to be deflected by way of the eccentric device (107), as a result of the movement of the eccentric device (107) into the second position (900), in such a way that the hook (715) releases the lever device (712), and the lever device (712) is flipped in a manner which is driven by way of the assisting spring (405).

12. Unlocking apparatus (105) according to one of the preceding claims, with at least one damping element (545) which is configured to acoustically damp at least one noise of the unlocking apparatus (105), the damping element (545) having at least one opening which is formed to receive a dome (1525) of an adapter device (502), the damping element (545) having at least one self-tapping screw (1515) which is formed to be screwed into the dome (1525) of the adapter device (502), in order to fix the unlocking apparatus (105) on the adapter device (502) when the damping element (545) is received by the dome (1525).

## Revendications

1. Dispositif de déverrouillage (105) destiné à détecter au moins une position d'une unité d'entraînement (106) dans une unité formant coulisseau (108), ou dans la région d'une unité formant coulisseau, destinée à un véhicule (100), le dispositif de déverrouillage (105) comportant au moins les éléments caractéristiques suivants :
- l'unité d'entraînement (106), qui est disposée ou peut être disposée dans une première position (215) au moins partiellement dans l'unité formant coulisseau (108) du dispositif de déverrouillage (105) pour verrouiller ou engager un frein de stationnement (110) du véhicule (100) et qui est disposée dans une deuxième position (900) en étant au moins partiellement sortie de l'unité formant coulisseau (108) pour déverrouiller ou désengager le frein de stationnement (110) ;
- l'unité formant coulisseau (108), qui est conformée pour recevoir l'unité d'entraînement (106) au moins partiellement dans la première position (215) de l'unité d'entraînement (106) ; et
- un moyen de détection (109) qui comporte au moins un moyen de détection d'entraînement (160) disposé au niveau de l'unité d'entraînement (106) et/ou un moyen de détection de coulisseau (165) disposé au niveau de l'unité formant coulisseau (108), le moyen de détection (109) étant conçu pour détecter au moins une/la position de l'unité d'entraînement (106) reçue dans l'unité formant coulisseau (108) ou disposée au niveau de l'unité formant coulisseau (108),
**caractérisé en ce que**
l'unité d'entraînement (106) est conformée comme un moyen excentrique (107), le dispositif de déverrouillage (105) est muni d'un moyen d'actionnement (147) qui est conçu pour déplacer, en réponse à un actionnement du moyen d'actionnement (147), le moyen excentrique (107) de la première position (215) à la deuxième position (900),
et
une portion (200) du moyen excentrique (107), laquelle est logée dans l'unité formant coulisseau (108), est conformée pour effectuer, en réponse à l'actionnement du moyen d'actionnement (147), un mouvement linéaire le long d'un moyen à axe excentrique (205) du moyen excentrique (107) qui s'étend perpendiculairement à un plan de portion (200).

2. Dispositif de déverrouillage (105) selon la revendication 1, dans lequel le moyen de détection (109) est conçu, lorsque le moyen de détection (109) comporte un moyen de détection d'entraînement (160) disposé au niveau de l'unité d'entraînement (106), pour déterminer une position d'un capteur d'entraînement (1315) du moyen de détection d'entraînement (160) et/ou, lorsque le moyen de détection (109) comporte un moyen de détection de coulisseau (165) disposé au niveau de l'unité formant coulisseau (108), pour comparer une position d'un capteur de coulisseau (1320) du moyen de détection de coulisseau (165) afin de détecter la position.

3. Dispositif de déverrouillage (105) selon l'une des revendications précédentes, dans lequel le dispositif de détection d'entraînement (160) comporte, lorsque le moyen de détection (109) comporte un dispositif de détection d'entraînement (160) disposé au niveau de l'unité d'entraînement (106), une pluralité de capteurs d'entraînement (1315) qui sont disposés en forme d'arc et/ou le dispositif de détection de coulisseau (165) comporte, lorsque le moyen de détection (109) comporte un moyen de détection de coulisseau (165) disposé au niveau de l'unité formant coulisseau (108), une pluralité de capteurs de coulisseau (1320) qui sont disposés linéairement.

4. Dispositif de déverrouillage (105) selon l'une des revendications précédentes, dans lequel le moyen de détection (109) comporte au moins un moyen de détection d'entraînement (160) disposé au niveau de l'unité d'entraînement (106) et un moyen de détection de coulisseau (165) disposé au niveau de l'unité formant coulisseau (108), et dans lequel au moins une position d'un capteur d'entraînement (1315) du moyen de détection d'entraînement (160) est associée à une position d'un capteur de coulisseau (1320) du moyen de détection de coulisseau (165), en particulier la position étant détectée lorsque la position de capteur d'entraînement n'est pas dans une relation prédéterminée avec la position de capteur coulisseau associée.

5. Dispositif de déverrouillage (105) selon l'une des revendications précédentes, dans lequel au moins un capteur d'entraînement (1315) du moyen de détection d'entraînement (160) et/ou un capteur de coulisseau (1320) du moyen de détection de coulisseau (165) sont conformés au moins partiellement comme capteur magnétique.

6. Dispositif de déverrouillage (105) selon l'une des revendications précédentes, dans lequel l'unité formant coulisseau (108) est accouplée ou peut être accouplée au frein de stationnement (110) par le biais d'un élément de transmission (155), en particulier d'un câble (155), l'unité formant coulisseau (108) étant conformée pour positionner, dans une position de verrouillage (220), l'élément de transmission (155) dans une position de verrouillage de stationnement afin de verrouiller ou d'engager le frein de stationnement (110) lorsque le moyen excentrique (107) est disposé dans la première position (215) et, en réponse au déplacement du moyen excentrique (107) dans la deuxième position (900), le faire passer dans une position de déverrouillage (905) dans laquelle l'unité formant coulisseau (108) positionne l'élément de transmission (155) dans une position de déverrouillage de stationnement afin de déverrouiller ou désengager le frein de stationnement (110).

7. Dispositif de déverrouillage (105) selon l'une des revendications précédentes, dans lequel la portion (200) du moyen excentrique (107) comporte un élément de décalage (600) qui est conformé pour limiter, en réponse au mouvement linéaire du moyen excentrique (107), le mouvement latéral (605) de l'unité formant coulisseau (108), lequel est perpendiculaire au mouvement linéaire.

8. Dispositif de déverrouillage (105) selon l'une des revendications précédentes, dans lequel le moyen excentrique (107) comporte au moins un ressort de compression (400) qui est détendu dans la première position (215) du moyen excentrique (107) et qui est disposé de manière à être mis en tension en réponse à l'actionnement par au moins un composant du moyen excentrique (107).

9. Dispositif de déverrouillage (105) selon l'une des revendications précédentes, comprenant un moyen de transfert (700) qui est conçu pour transférer l'unité formant coulisseau (108) de la position verrouillée (220) à la position déverrouillée (905), le moyen de transfert (700) comportant au moins un ressort d'assistance (405) qui est disposé de manière à exercer dans la position de verrouillage (220) de l'unité formant coulisseau (108) une précontrainte sur l'unité formant coulisseau (108) et/ou un moyen à levier (712) du dispositif de transfert (700), le ressort d'assistance (405) étant disposé de manière à libérer la précontrainte, en réponse au mouvement du moyen excentrique (107) jusque dans la deuxième position (900), afin de permettre le transfert de l'unité formant coulisseau (108) jusque dans la position déverrouillée (905).

10. Dispositif de déverrouillage (105) selon la revendication 9, dans lequel le moyen de transfert (700) comporte au moins le moyen à levier (712) qui est conformé pour basculer en réponse à une libération de la précontrainte du ressort d'assistance (405) afin de déplacer l'unité formant coulisseau (108) jusque dans la position de déverrouillage (905).

11. Dispositif de déverrouillage (105) selon la revendication 10, dans lequel le moyen de transfert (700) comporte au moins un moyen à crochets (710) muni d'au moins un crochet (715) qui est accouplé, dans la première position (215) du moyen excentrique (107), au moyen à levier (712) pour empêcher le basculement du moyen à levier (712), le moyen à crochets (710) étant disposé de manière à être dévié par le moyen excentrique (107), par le mouvement du moyen excentrique (107) jusque dans la deuxième position (900), de telle sorte que le crochet (715) libère le moyen à levier (712) et que le moyen à levier (712) soit basculé en étant entraîné par le ressort d'assistance (405).

12. Dispositif de déverrouillage (105) selon l'une des revendications précédentes, comprenant au moins un élément d'amortissement (545) qui est conçu pour effectuer un amortissement acoustique d'au moins un bruit du dispositif de déverrouillage (105), l'élément d'amortissement (545) comportant au moins une ouverture qui est conçue pour recevoir un dôme (1525) d'un moyen d'adaptation (502), l'élément d'amortissement (545) comportant au moins une vis auto-taraudeuse (1515) qui est conçue pour être vissée dans le dôme (1525) du dispositif d'adaptation (502) afin de fixer le dispositif de déverrouillage (105) au moyen d'adaptation (502) lorsque l'élément d'amortissement (545) est reçu par le dôme (1525).
